# EUROPEAN PATENT APPLICATION

(11) **EP 4 358 200 A1**
(43) Date of publication of application: **24.04.2024**
(21) Application number: 22864898.6
(22) Date of filing: 09.08.2022
(51) Int. Cl.: H01M 8/04119, B01D 63/02

(54) **CARTRIDGE FOR MEMBRANE HUMIDIFIER, AND FUEL CELL MEMBRANE HUMIDIFIER COMPRISING SAME**

(30) Priority: 02.09.2021 KR 20210116960
(71) Applicant: Kolon Industries, Inc., Seoul 07793 (KR)
(72) Inventor: LEE, Ah Reum, Seoul 07793 (KR); OH, Young Seok, Seoul 07793 (KR); LEE, Ji Yoon, Seoul 07793 (KR)
(74) Representative: Ter Meer Steinmeister & Partner
(86) International application number: PCT/KR2022/011848
(87) International publication number: WO 2023/033393

(57) **Abstract**

Provided are a membrane humidifier cartridge, in which a hollow fiber membrane accommodated in a cartridge may be prevented from being damaged by a fluid, and a fuel cell membrane humidifier including the same. The membrane humidifier cartridge may include an inner case accommodating therein a hollow fiber membrane in which a first fluid flows, and including a material having a first hardness, a potting portion fixing a terminal of the hollow fiber membrane, a first mesh hole portion through which a second fluid is introduced, and including a plurality of windows, and a second mesh hole portion through which the second fluid introduced through the first mesh hole portion is discharged after exchanging moisture with the first fluid through the hollow fiber membrane, and including a plurality of windows. At least any one of the first mesh hole portion and the second mesh hole portion may include a material having a second hardness that is less than the first hardness.

## Description

### Technical Field

The present disclosure relates to a membrane humidifier cartridge and a fuel cell membrane humidifier including the same, and more particularly, to a membrane humidifier cartridge, in which a hollow fiber membrane accommodated in a cartridge may be prevented from being damaged by a fluid, and a fuel cell membrane humidifier including the same.

### Background Art

Fuel cells refer to power-generating batteries that produce electricity by combining hydrogen with oxygen. Unlike general chemical cells such as batteries, storage batteries, etc., fuel cells may continuously produce electricity as long as hydrogen and oxygen are supplied, and are twice as efficient as internal combustion engines because there is no heat loss.

Moreover, fuel cells emit low levels of pollutants because chemical energy generated by the combination of hydrogen with oxygen is directly converted into electrical energy. Thus, the fuel cells are not only environment-friendly, but also reduce concerns about resource depletion due to increasing energy consumption.

Fuel cells may be roughly classified, according to a type of an electrolyte used therein, into polymer electrolyte membrane fuel cells (PEMFCs), phosphoric acid fuel cells (PAFCs), molten carbonate fuel cells (MCFCs), solid oxide fuel cells (SOFCs), alkaline fuel cells (AFCs), and so forth.

Each fuel cell operates on fundamentally the same principle, but the type of fuel used, the operating temperature, the catalyst, the electrolyte, etc., are different. Among them, PEMFCs are known to be most promising not only for small stationary power generation equipment, but also for transportation systems, because they operate at lower temperatures than other fuel cells and may be miniaturized due to their high power densities.

One of the important factors for improving the performance of a PEMFC is maintaining a moisture content by supplying a certain amount of moisture to a polymer electrolyte membrane or proton exchange membrane (PEM) of a membrane-electrode assembly (MEA). This is because when the polymer electrolyte membrane dries, power generation efficiency rapidly decreases.

Methods of humidifying a polymer electrolyte membrane may include 1) a bubbler humidification method in which a pressure-resistant container is filled with water and a target gas is passed through a diffuser to supply moisture, 2) a direct injection method in which a supply moisture amount required for a fuel cell reaction is calculated and moisture is directly supplied to a gas flow pipe through a solenoid valve, 3) a humidifying membrane method in which moisture is supplied to a fluidized layer of a gas by using a polymer separator, and so forth.

Among them, a membrane humidification method, in which vapor is provided to air supplied to a polymer electrolyte membrane by using a membrane that selectively allows vapor included in an off-gas to pass therethrough so as to humidify the polymer electrolyte membrane is favorable in making a membrane humidifier lighter and more compact.

When forming a module, a selective permeable membrane used in a membrane humidification method may preferably be a hollow fiber membrane with a large permeation area per unit volume. That is, when a membrane humidifier is manufactured using a hollow fiber membrane, high integration of the hollow fiber membrane with a large contact surface area is possible, and thus, sufficient humidification of a fuel cell merely with a small amount of the hollow fiber membrane may be achieved, low-cost materials may be used, and moisture and heat included in an off-gas discharged at high temperature from the fuel cell may be recovered and reused through the membrane humidifier.

### Disclosure

### Technical Problem

The present disclosure provides a membrane humidifier cartridge, in which a hollow fiber membrane accommodated in a cartridge may be prevented from being damaged by a fluid, and a fuel cell membrane humidifier including the same.

### Technical Solution

According to an embodiment of the present disclosure, a membrane humidifier cartridge may include an inner case accommodating therein a hollow fiber membrane in which a first fluid flows, and including a material having a first hardness, a potting portion fixing a terminal of the hollow fiber membrane, a first mesh hole portion through which a second fluid is introduced, and including a plurality of windows, and a second mesh hole portion through which the second fluid introduced through the first mesh hole portion is discharged after exchanging moisture with the first fluid through the hollow fiber membrane, and including a plurality of windows. At least any one of the first mesh hole portion and the second mesh hole portion may include a material having a second hardness that is less than the first hardness.

In the membrane humidifier cartridge according to an embodiment of the present disclosure, the impact-absorbing portion may include an absorbing layer formed on a hollow fiber membrane side surface of a joint formed by cutting a part of the inner case, and including a material having the second hardness.

In the membrane humidifier cartridge according to an embodiment of the present disclosure, the impact-absorbing portion may include an absorbing layer formed to surround a joint formed by cutting a part of the inner case, and including a material having the second hardness.

In the membrane humidifier cartridge according to an embodiment of the present disclosure, an opening may be formed in the inner case, the first mesh hole portion and the second mesh hole portion may be formed in the impact-absorbing portion, and the impact-absorbing portion may be an absorbing plate that covers the opening formed in the inner case and includes a material having the second hardness.

In the membrane humidifier cartridge according to an embodiment of the present disclosure, the first hardness may be in a range of Shore D 20 to 80, and the second hardness may be in a range of Shore A 5 to 80.

According to an embodiment of the present disclosure, a fuel cell membrane humidifier performs moisture exchange between a first fluid and a second fluid, and includes a mid-case, a second fluid inlet introducing the second fluid into the mid-case, a second fluid outlet discharging the second fluid to outside, and at least one cartridge disposed in the mid-case and accommodating a plurality of hollow fiber membranes. The cartridge may include an inner case accommodating therein a hollow fiber membrane in which the first fluid flows, and including a material having a first hardness, a potting portion fixing a terminal of the hollow fiber membrane, a first mesh hole portion through which a second fluid is introduced, and including a plurality of windows, and a second mesh hole portion through which the second fluid introduced through the first mesh hole portion is discharged after exchanging moisture with the first fluid through the hollow fiber membrane, and including a plurality of windows. At least any one of the first mesh hole portion and the second mesh hole portion may include a material having a second hardness that is less than the first hardness.

In the fuel cell membrane humidifier according to an embodiment of the present disclosure, the impact-absorbing portion may include an absorbing layer formed on a hollow fiber membrane side surface of a joint formed by cutting a part of the inner case, and including a material having the second hardness.

In the fuel cell membrane humidifier according to an embodiment of the present disclosure, the impact-absorbing portion may include an absorbing layer formed to surround a joint formed by cutting a part of the inner case, and including a material having the second hardness.

In the fuel cell membrane humidifier according to an embodiment of the present disclosure, an opening may be formed in the inner case, the first mesh hole portion and the second mesh hole portion may be formed in the impact-absorbing portion, and the impact-absorbing portion may be an absorbing plate that covers the opening formed in the inner case and includes a material having the second hardness.

In the fuel cell membrane humidifier according to an embodiment of the present disclosure, the first hardness may be in a range of Shore D 20 to 80, and the second hardness may be in a range of Shore A 5 to 80.

Details of implementations according to various aspects of the present disclosure are included in the following detailed description.

### Advantageous Effects

According to embodiments of the present disclosure, a hollow fiber membrane fluctuating in a fluid flow direction may contact an impact-absorbing portion of a soft material to reduce friction occurring in the hollow fiber membrane, thereby reducing damage caused by long-time repetitive use.

### Description of Drawings

FIG. 1 is a front view showing a fuel cell membrane humidifier according to an embodiment of the present disclosure.
FIG. 2 is a plan view showing a fuel cell membrane humidifier according to an embodiment of the present disclosure.
FIG. 3 is a cross-sectional view viewed from a line A-A' of FIG. 2.
FIG. 4 is a plan view showing a cartridge mounted on a fuel cell membrane humidifier according to an embodiment of the present disclosure.
FIG. 5 is a cross-sectional view viewed from a line B-B' of FIG. 4.
FIG. 6 is a cross-sectional view viewed from a line C-C' of FIG. 4.
FIG. 7 is a plan view showing a cartridge mounted on a fuel cell membrane humidifier according to another embodiment of the present disclosure.
FIG. 8 is a plan view showing a cartridge of FIG. 7.
FIG. 9 is a cross-sectional view viewed from a line D-D' of FIG. 8.

### Mode for Invention

The present disclosure may have various modifications thereto and various embodiments, and thus particular embodiments will be illustrated and described in detail in a detailed description. It should be understood, however, that this is not intended to limit the present disclosure to a particular embodiment of the present disclosure, and should be understood to include all changes, equivalents, and alternatives falling within the spirit and scope of the present disclosure.

The term used herein is used to describe particular embodiments, and is not intended to limit the present disclosure. Singular forms include plural forms unless apparently indicated otherwise contextually. Herein, it should be understood that the term 'include', 'have', or the like used herein is to indicate the presence of features, numbers, steps, operations, elements, parts, or a combination thereof described in the specifications, and does not preclude the presence or addition of one or more other features, numbers, steps, operations, elements, parts, or a combination thereof. Hereinbelow, a membrane humidifier cartridge and a fuel cell membrane humidifier including the same according to an embodiment of the present disclosure will be described with reference to the drawings.

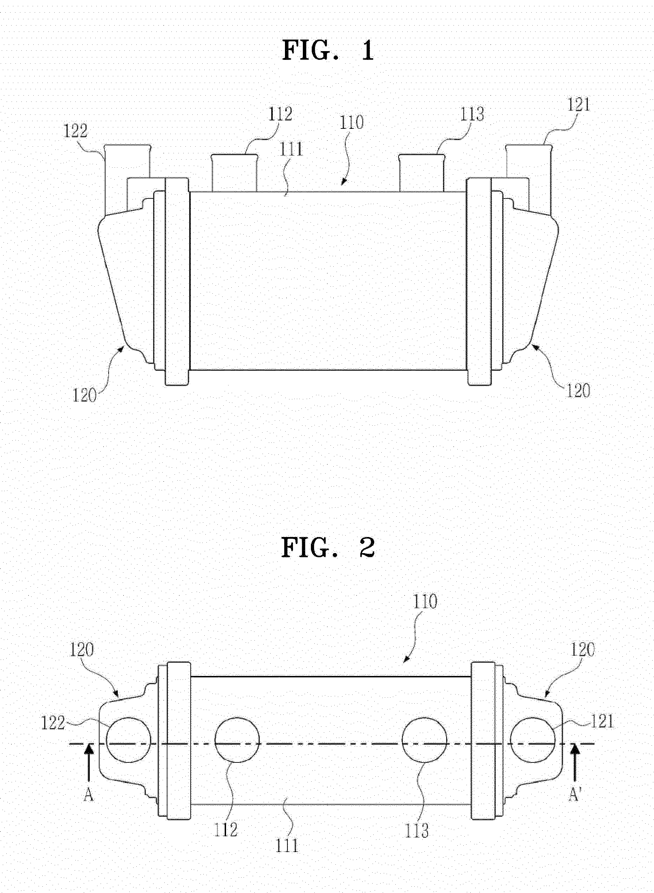

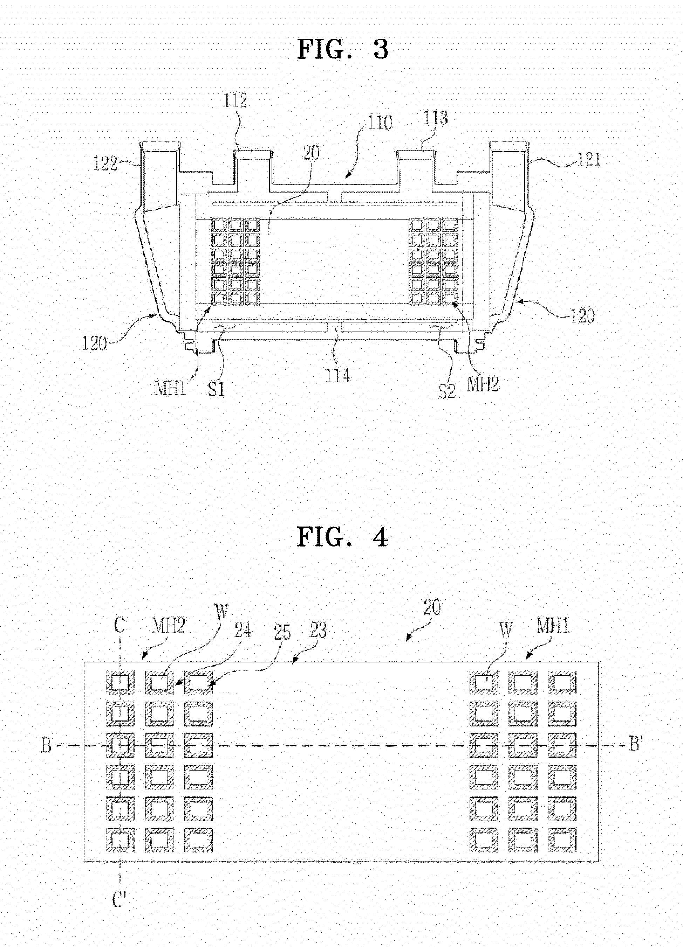

FIG. 1 is a front view showing a fuel cell membrane humidifier according to an embodiment of the present disclosure, FIG. 2 is a plan view showing a fuel cell membrane humidifier according to an embodiment of the present disclosure, and FIG. 3 is a cross-sectional view viewed from a line A-A' of FIG. 2.

As shown in FIGS. 1 to 3, the fuel cell membrane humidifier according to an embodiment of the present disclosure may include a humidifying module 110 and caps 120.

The humidifying module 110 may perform moisture exchange between a first fluid supplied from outside and a second fluid discharged from a fuel cell stack (not shown). The caps 120 may be engaged with both ends of the humidifying module 110. A first fluid inlet 121 for supplying the first fluid supplied from the outside to the humidifying module 110 may be formed in any one of the caps 120, and a first fluid outlet 122 for supplying the first fluid humidified by the humidifying module 110 to a fuel cell stack may be formed in the other one of the caps 120.

The humidifying module 110 may include a mid-case 111 having a second fluid inlet 112 and a second fluid outlet 113 and at least one cartridge 20 arranged in the mid-case 111. The second fluid discharged from the fuel cell stack (not shown) may be introduced to the second fluid inlet 112 to exchange moisture in the humidifying module 110 and then may be discharged through the second fluid outlet 113.

Herein, a fluid introduced/discharged to/through the second fluid inlet 112 or the second fluid outlet 113 is not limited to the second fluid. The fluid introduced/discharged to/through the first fluid inlet 121 or the first fluid outlet 122 is not limited to the first fluid. According to designs, one of the caps 120 may supply the second fluid to the humidifying module 110 to allow the second fluid to flow inside the hollow fiber membrane, and the other one of the caps 120 may discharge the second fluid having exchanged moisture to the outside. Also, in this case, the first fluid may be introduced through any one of the second fluid inlet 112 or the second fluid outlet 113, and the first fluid humidified by the humidifying module 110 may be supplied to the fuel cell stack through the other one. A flow direction of the first fluid and a flow direction of the second fluid may be the same as or opposite to each other.

The mid-case 111 and the cap 120 may be formed of hard plastic or metal independently of each other and have a circular or polygonal widthwise cross-section. The circular shape may include an oval shape, and the polygonal shape may include polygons having rounded corners. For example, the hard plastic may include polycarbonate, polyamide (PA), polyphthalamide (PPA), polypropylene (PP), etc. An internal space of the mid-case 111 may be divided into a first space S1 and a second space S2 by a barrier 114.

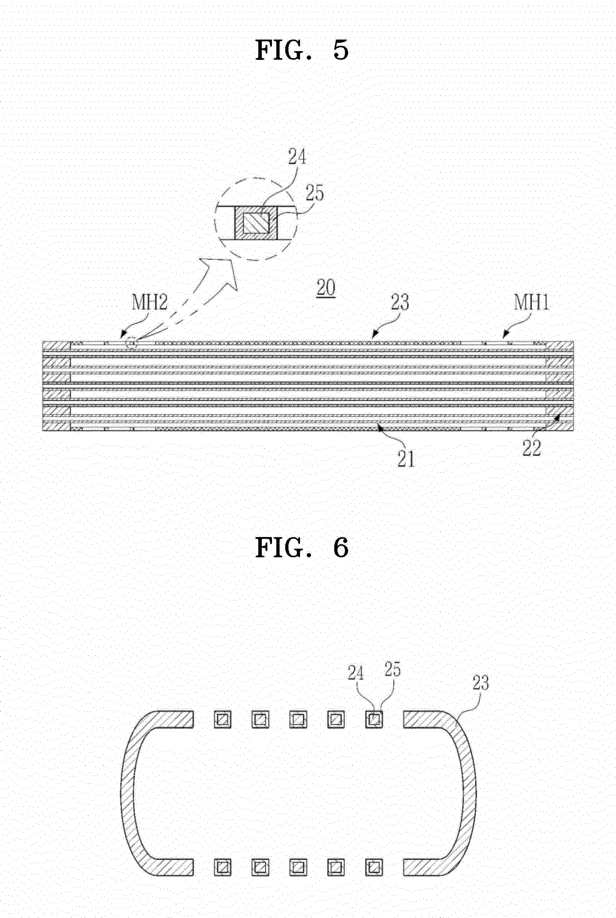

FIG. 4 is a plan view showing a cartridge mounted on a fuel cell membrane humidifier according to an embodiment of the present disclosure, FIG. 5 is a cross-sectional view viewed from a line B-B' of FIG. 4, and FIG. 6 is a cross-sectional view viewed from a line C-C' of FIG. 4.

Referring to FIGS. 4 to 6, the membrane humidifier cartridge 20 according to an embodiment of the present disclosure may include a plurality of hollow fiber membranes 21, a potting portion 22, an inner case 23, and an impact-absorbing portion 25.

The hollow fiber membrane 21 may include polysulfone resin, polyethersulfone resin, sulfonated polysulfone resin, polyvinylidene fluoride (PVDF) resin, polyacrylonitrile (PAN) resin, polyimide resin, polyamidoimide resin, polyesterimide resin, or a polymer membrane formed of a mixture of at least two of them.

The potting portion 22 may fix terminals of the hollow fiber membrane 21. The potting portion 22 may be formed by curing liquid resin such as liquid polyurethane resin through a casting method such as deep potting, centrifugal potting, etc.

The inner case 23 may have an opening at each terminal thereof and accommodate a plurality of hollow fiber membranes 21 therein. The potting portion 22 in which ends of the hollow fiber membrane 21 are potted may close the openings of the inner case 23. The inner case 23 may include a first mesh hole portion MH1 arranged in a mesh form for fluid communication with the first space S1 and a second mesh hole portion MH2 arranged in the mesh form for fluid communication with the second space S2.

The second fluid introduced to the first space S1 of the mid-case 111 through the second fluid inlet 112 may flow into the inner case 23 through the first mesh hole portion MH1 where a plurality of windows W are formed, and thus may contact an outer surface of the hollow fiber membrane 21. Then, the second fluid having exchanged moisture with the first fluid may exit into the second space S2 through the second mesh hole portion MH2 where the plurality of windows W are formed, and then may be discharged from the mid-case 111 through the second fluid outlet 113.

When the flow direction of the second fluid is opposite to the flow direction of the first fluid introduced to the first fluid inlet 121, the second fluid introduced to the second space S2 of the mid-case 111 through the second fluid outlet 113 may flow into the inner case 23 through the second mesh hole portion MH2 and contact the outer surface of the hollow fiber membrane 21. Then, the second fluid having exchanged moisture with the first fluid may exit into the first space S1 through the first mesh hole portion MH1 and then may be discharged from the mid-case 111 through the second fluid inlet 112.

The inner case 23 may be formed of a material having a first hardness to protect the hollow fiber membrane 21 from a pressure of the second fluid. For example, the first hardness may be in a range of Shore D 20 to 80. More specifically, the inner case 23 may be formed of plastic of a hard material.

Meanwhile, in a conventional membrane humidifier cartridge, the hollow fiber membrane 21 accommodated in the inner case 23 may fluctuate in a fluid flow direction by the second fluid introduced into the inner case 23 through the first mesh hole portion MH1. As the hollow fiber membrane 21 repeatedly contacts a joint 24 forming a window W while fluctuating, the hollow fiber membrane 21 may be damaged (scratched, disconnected, etc.) by friction. This may also occur when the second fluid is discharged to outside through the second mesh hole portion MH2.

To prevent the hollow fiber membrane 21 from being damaged, the present disclosure may include the impact-absorbing portion 25.

The impact-absorbing portion 25 may be formed of a material having a second hardness less than a hardness of the inner case 23. For example, the second hardness may be in a range of Shore A 5 to 80. More specifically, the impact-absorbing portion 25 may be formed of a soft rubber material such as urethane, silicon, etc.

The impact-absorbing portion 25 may be formed by double injection on the joint 24 formed by cutting a part of the inner case 23. The window W may be an inner space formed by, for example, four joints 24. The shape of the window W may not be limited thereto, and may be formed in various shapes such as a polygonal shape, a circular shape, an oval shape, etc.

In an embodiment, as shown in FIGS. 4 to 6, the impact-absorbing portion 25 may be formed as an absorbing layer formed of a material having a second hardness. The absorbing layer may be formed to surround the joint 24 by double injection. Alternatively, the absorbing layer may be formed on a hollow fiber membrane side surface of the joint 24.

The hollow fiber membrane 21 fluctuating by the second fluid may contact the impact-absorbing portion 25 which includes a soft material, thus reducing friction between the hollow fiber membrane 21 and the impact-absorbing portion 25. Thus, in spite of repetitive contact due to long-time use, damage (scratch, disconnection, etc.) caused by friction may be reduced.

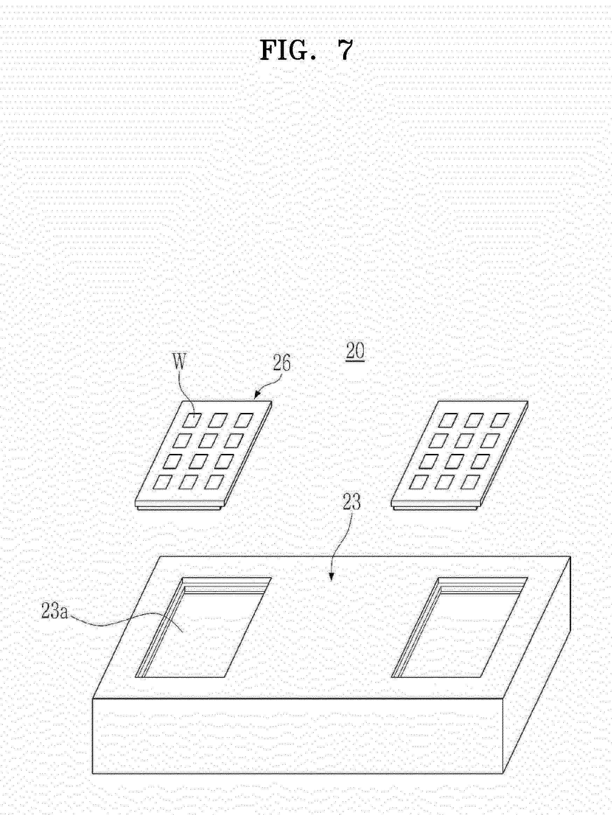

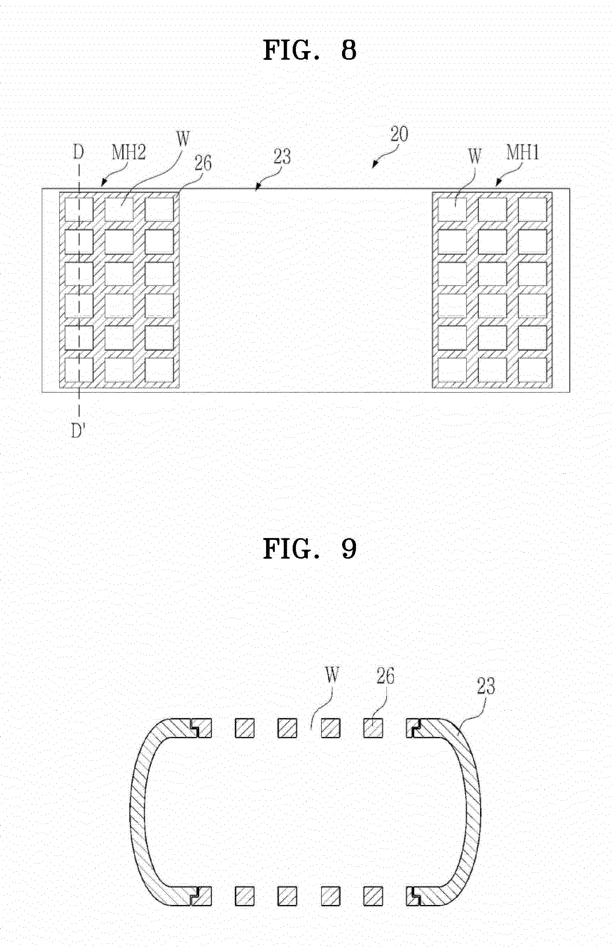

Next, a membrane humidifier cartridge according to another embodiment will be described with reference to FIGS. 7 to 9. FIG. 7 is a perspective view showing a cartridge mounted on the fuel cell membrane humidifier according to another embodiment of the present disclosure, FIG. 8 is a plan view showing the cartridge of FIG. 7, and FIG. 9 is a cross-sectional view viewed from a line D-D' of FIG. 8.

Referring to FIGS. 7 to 9, the membrane humidifier cartridge 20 according to another embodiment of the present disclosure may include the plurality of hollow fiber membranes 21, the potting portion 22, the inner case 23, and an impact-absorbing portion 26.

Descriptions of the hollow fiber membranes 21 and the potting portion 22 are substantially the same as those made in the above-described embodiment and thus will not be repeated.

In the current embodiment, an opening 23a in place of the joint 24 may be formed in the inner case 23, and the impact-absorbing portion 26 may be formed in the form of an absorbing plate inserted into the opening 23a to cover the opening 23a. The impact-absorbing portion 26 may be formed of a material having the second hardness less than the hardness (the first hardness) of the inner case 23. For example, the impact-absorbing portion 26 may be formed of a soft rubber material such as urethane, silicon, etc.

The plurality of windows W for introducing and discharging the second fluid may be formed in the impact-absorbing portion 26, and may form the mesh hole portions MH1 and MH2. That is, in the current embodiment, the impact-absorbing portion 26 may reduce friction with the hollow fiber membrane 21 while functioning as the mesh hole portions MH1 and MH2.

The hollow fiber membranes 21 fluctuating by the second fluid introduced through the windows W formed in the impact-absorbing portion 26 may contact the impact-absorbing portion 26 that is formed of a soft material, thereby reducing friction between the hollow fiber membranes 21 and the impact-absorbing portion 26. Thus, in spite of repetitive contact due to long-time use, damage (scratch, disconnection, etc.) caused by friction may be reduced.

Although the embodiments of the present disclosure have been described above, those of ordinary skill in the art may modify and change the present disclosure variously by adding, changing, deleting or appending components without departing from the spirit of the present disclosure as set forth in the claims and such modifications and changes may also fall within the range of the present disclosure.

### Explanation of Reference Numerals

- 110: Humidifying Module: 111: Mid-Case
- 112: Second Fluid Inlet: 113: Second Fluid Outlet
- 114: Barrier: 120: Cap
- 20: Cartridge: 21: Hollow Fiber Membrane
- 22: Potting Portion: 23: Inner Case
- 24 : Joint: 25, 26 : Impact-Absorbing Portion
- MH1: First Mesh Hole Portion: MH2: Second Mesh Hole Portion

## Claims

1. A membrane humidifier cartridge comprising:
an inner case accommodating therein a hollow fiber membrane in which a first fluid flows, and comprising a material having a first hardness;
a potting portion fixing a terminal of the hollow fiber membrane;
a first mesh hole portion through which a second fluid is introduced, and comprising a plurality of windows; and
a second mesh hole portion through which the second fluid introduced through the first mesh hole portion is discharged after exchanging moisture with the first fluid through the hollow fiber membrane and comprising a plurality of windows,
wherein at least any one of the first mesh hole portion and the second mesh hole portion comprises a material having a second hardness that is less than the first hardness.

2. The membrane humidifier cartridge of claim 1, wherein the impact-absorbing portion comprises an absorbing layer formed on a hollow fiber membrane side surface of a joint formed by cutting a part of the inner case, and comprising a material having the second hardness.

3. The membrane humidifier cartridge of claim 1, wherein the impact-absorbing portion comprises:
a joint formed by cutting a part of the inner case; and
an absorbing layer formed to surround the joint and comprising a material having the second hardness.

4. The membrane humidifier cartridge of claim 1, wherein an opening is formed in the inner case,
the first mesh hole portion and the second mesh hole portion are formed in the impact-absorbing portion, and
the impact-absorbing portion is an absorbing plate that covers the opening formed in the inner case and comprises a material having the second hardness.

5. The membrane humidifier cartridge of any one of claims 1 to 4, wherein the first hardness is in a range of Shore D 20 to 80, and the second hardness is in a range of Shore A 5 to 80.

6. A fuel cell membrane humidifier performing moisture exchange between a first fluid and a second fluid and comprising:
a mid-case;
a second fluid inlet introducing the second fluid into the mid-case;
a second fluid outlet discharging the second fluid to outside; and
at least one cartridge disposed in the mid-case and accommodating a plurality of hollow fiber membranes,
wherein the cartridge comprises:
an inner case accommodating therein a hollow fiber membrane in which the first fluid flows, and comprising a material having a first hardness;
a potting portion fixing a terminal of the hollow fiber membrane;
a first mesh hole portion through which the second fluid is introduced, and comprising a plurality of windows; and
a second mesh hole portion through which the second fluid introduced through the first mesh hole portion is discharged after exchanging moisture with the first fluid through the hollow fiber membrane, and comprising a plurality of windows, and
at least any one of the first mesh hole portion and the second mesh hole portion comprises an impact-absorbing portion comprising a material having a second hardness less than the first hardness.

7. The fuel cell membrane humidifier of claim 6, wherein the impact-absorbing portion comprises an absorbing layer formed on a hollow fiber membrane side surface of a joint formed by cutting a part of the inner case and comprising a material having the second hardness.

8. The fuel cell membrane humidifier of claim 6, wherein the impact-absorbing portion comprises:
a joint formed by cutting a part of the inner case; and
an absorbing layer formed to surround the joint and comprising a material having the second hardness.

9. The fuel cell membrane humidifier of claim 6, wherein an opening is formed in the inner case,
the first mesh hole portion and the second mesh hole portion are formed in the impact-absorbing portion, and
the impact-absorbing portion is an absorbing plate that covers the opening formed in the inner case and comprises a material having the second hardness.

10. The fuel cell membrane humidifier of any one of claims 6 to 9, wherein the first hardness is in a range of Shore D 20 to 80, and the second hardness is in a range of Shore A 5 to 80.
